# EUROPÄISCHE PATENTSCHRIFT

(11) **EP 1 350 563 B1**
(45) Veröffentlichungstag und Bekanntmachung des Hinweises auf die Patenterteilung: **04.10.2006**
(21) Anmeldenummer: 03006279.8
(22) Anmeldetag: 21.03.2003
(51) Int. Cl.: B01J 20/26, B01J 39/20, C08F 257/02, C08F 285/00, C08F 291/00

(54) **Verfahren zur Herstellung von grobkörnigen gelförmigen Anionenaustauschern**
Process for preparing anion exchange material in form of a gel having large particle size
Procédé de préparation de resin anionique en form de gel ayant des particules larges

(30) Priorität: 04.04.2002 DE 10214844
(43) Veröffentlichungstag der Anmeldung: 08.10.2003
(73) Patentinhaber: LANXESS Deutschland GmbH, 51369 Leverkusen (DE)
(72) Erfinder: Feistel, Lothar, Dr., 04509 Delitzsch (DE); Schade, Gerold, Dr., 06849 Dessau (DE); Mittag, Hubertus, Dr., 06766 Wolfen (DE)

(56) Entgegenhaltungen:
- EP-A- 0 062 088
- EP-A- 0 321 096
- US-A- 5 157 084
- US-B1- 6 228 925

## Beschreibung

Die Erfindung betrifft ein Verfahren zur Herstellung von grobkörnigen, monodispersen gelförmigen Anionenaustauschern mit hoher Stabilität und Reinheit.

In jüngster Zeit haben Anionenaustauscher mit möglichst großer und einheitlicher Teilchengröße, bevorzugt mit einer Teilchengröße > 800 µm zunehmend an Bedeutung gewonnen, weil bei vielen Anwendungen aufgrund der groben Körnung des Austauscherbettes wirtschaftliche Vorteile erzielt werden können. Besonders monodisperse Ionenaustauscher bieten diesen Vorteil. Sie können durch Funktionalisieren von monodispersen Perlpolymerisaten erhalten werden.

Für einen Einsatz in der Gasadsorption, Katalyse und der Hydrometallurgie eignen sich besonders grobkörnige Materialien.

Mittels der bisher üblichen Verfahren lassen sich Ionenaustauscher in einer Körnung von 300 bis 800 µm herstellen. Zur Herstellung von Ionenaustauscher mit einer Körnung von > 800 µm, also sogenannte gröbere Austauscher, werden in der Literatur mehrere Lösungswege beschrieben.

Die US 2 992 544 beschreibt die Copolymerisation von Chlormethylstyrol und Divinylbenzol und die Umwandlung zum Anionenaustauscher. Die US 3 122 514 beschreibt die Synthese von groben Ionenaustauschern aus Polyvinylverbindungen und Präpolymeren. Beide Synthesewege greifen auf Ausgangsstoffe zurück, die in Quantität und Qualität nicht in ausreichenden Mengen zur Verfügung stehen.

Ein anderer Syntheseweg führt zu Ionenaustauschern, die aus feinen Ionenaustauscherkörnern mit einem Durchmesser meist unter 100 µm oder gebrochenen Ionenaustauschermaterial bestehen, die wiederum in einem inerten Material eingebettet sind. Als Einbettungsmittel werden oft Olefinpolymere eingesetzt, wie z.B. in den DE-PS 1 285 170, DE-PS 2 237 953 und DE-PS 2 343 417 sowie in der DD- PS 114 350 beschrieben. Ein wesentlicher Nachteil dieser Materialien ist jedoch die geringe nutzbare Kapazität, hervorgerufen durch den inerten Polymeranteil und die erschwerte Zugänglichkeit der ionenaustauschenden Partikel.

In gleicher Weise sind die in der DD - PS 158905 beschriebenen Partikel, hergestellt durch Feedung von inerten Polymerformkörpern vorwiegend auf der Basis von Olefinpolymeren mit Styrol-Divinylbenzolmonomeren und anschließender Modifizierung zu ionenaustauschenden Materialien für die praktische Anwendung nicht immer geeignet.

Ein weiterer Weg zur Herstellung grobkörniger Ionenaustauscher besteht durch die Möglichkeit der Seed-Feed-Polymerisation. Das Grundprinzip besteht darin, eine niedrig vernetzte Saat aus Styrol und Divinylbenzol herzustellen, wobei der Vernetzergehalt 0,05 bis 0,6 % betragen soll.

Durch den Einsatz des sehr niedrig vernetzten Ausgangspolymeren werden vermehrt extrahierbare Bestandteile in die Synthese eingetragen bzw. werden aus dem fertigen Austauscher ausgewaschen. Anschließend erfolgt eine Feedpolymerisation mit der 2- bis 15-fachen Gewichtsmenge des Saatpolymeren, wobei der Vernetzer in weiten Grenzen (0,5 bis 50 Gew.-%) variiert werden kann. EP-A 0 062 088 beschreibt dieses Prinzip, wobei die Überführung des chlormethylierten Zwischenproduktes zum Anionenaustauscher unter schonenden Bedingungen in Gegenwart von Dimethoxymethan erfolgt.

In der DD-PS 229 696 wird zur Verbesserung der Stabilität des Endproduktes bei der Feedung ein Inertmittel zugesetzt.

Die DD-PS 158 906 beschreibt die Synthese von grobkörnigen Polymeren als Vorprodukte für entsprechende Ionenaustauscher. Auch hier wird zur Verbesserung der mechanischen Stabilität ein Inertmittel zugesetzt. Erreicht wird die Grobkörnigkeit durch den Einsatz eines speziellen Rührers.

Die zitierten Verfahren weisen eindeutig auf die Problematik bei der Synthese grobkörniger monodisperser Ionenaustauscher hin, die in den Verfahren zu Bildung der Grobkörnigkeit und in den physiko-chemischen Eigenschaften der Endprodukte liegen.

Eine der Möglichkeiten, monodisperse Perlpolymerisate herzustellen, besteht im sogenannten Seed/Feed-Verfahren (Saat-Zulaufverfahren), wonach ein monodisperses Polymerisat ("Saat") im Monomer gequollen und dieses dann polymerisiert wird. Seed/Feed-Verfahren werden beispielsweise in den EP-A-0 098 130 und EP-A-0 101 943 beschrieben. Die bei Seed/Feed-Verfahren eingesetzten Saatpolymere sollten einen hohen Quellungsindex aufweisen, damit sie beim Seed/Feed-Verfahren eine große Menge der zugesetzten Monomeren aufnehmen können. Als Quellungsindex (QI) ist der Quotient aus dem Volumen des gequollenen Polymeren und dem Volumen des nicht gequollenen Polymeren definiert. Der Quellungsindex lässt sich in bekannter Weise durch den Gehalt an Vernetzer steuern: niedrige Vernetzergehalte führen zu hohen Quellungsindices und umgekehrt. So weisen beispielsweise Styrolpolymerisate, die mit 0,8 bis 2,0 Gew.-% Divinylbenzol vernetzt sind, Quellungsindices von 8 bis 2,5 in Toluol auf. Sehr niedrig vernetzte Saatpolymerisate haben allerdings einen recht hohen Anteil nicht vernetzter extrahierbarer Bestandteile. Dieser Anteil extrahierbarer Bestandteile im Saatpolymerisat ist in mehrfacher Hinsicht unerwünscht, weil
1. Die Polymerisation der gequollenen Saat dadurch gestört werden kann, dass die durch das zugesetzte Monomer aus der Saat herausgelösten Polymeranteile Verklebungen der Partikel untereinander verursachen;
2. Die Funktionalisierung zur Herstellung der Anionenaustauscher dadurch erschwert werden kann, dass die herausgelösten Anteile in den zur Funktionalsierung eingesetzten Reaktionslösungen angereichert werden;
3. Die Anionenaustauscher erhöhte Mengen an löslichen Polymeren enthalten können; was zu einem unerwünschten Ausbluten (Leaching) der Ionenaustauscher führen kann.

Ein weiteres Problem der bekannten Anionenaustauscher besteht in ihrer nicht immer ausreichenden mechanischen und osmotischen Stabilität. Dieses wird besonders deutlich, wenn man Austauscher mit einer groberen Körnung synthetisiert. So können Anionenaustauscherperlen bei ihrer Herstellung oder bei ihrer Anwendung durch auftretende mechanische oder osmotischen Kräfte zerbrechen. Für alle Anwendungen von Anionenaustauschern gilt, dass die in Perlform vorliegenden Austauscher ihren Habitus behalten müssen und nicht während der Anwendung teilweise oder auch gänzlich abgebaut werden oder in Bruchstücke zerfallen dürfen. Bruchstücke können während der Anwendung in die zu behandelnden Lösungen gelangen und diese selbst verunreinigen bzw. Trennprozesse erschweren und zu Verlusten an adsorbiertem Material führen. Ferner ist das Vorhandensein von geschädigten Anionenaustauschern für die Funktionsweise der in Säulenverfahren eingesetzten Ionenaustauscher selbst ungünstig. Splitter führen zu einem erhöhten Druckverlust des Säulensystems und vermindern damit den Durchsatz der zu reinigenden Flüssigkeit durch die Säule oder führen zu einer erschwerten Trennung bei Anwendung im Batchverfahren.

Aufgabe der vorliegenden Erfindung ist es deshalb, ein Verfahren zur Herstellung von grobkörnigen, monodispersen gelförmigen Anionenaustauschern mit einer Körnung größer 800 µm mit hoher Stabilität und Reinheit zu entwickeln, um damit Anionenaustauscher herzustellen, die neben den typischen Anwendungen für Anionenaustauscher auch gut für Anwendungen in der Hydrometallurgie geeignet sind.

Die erfindungsgemäß zu synthetisierenden monodispersen gelförmigen Anionenaustauscher sollen zudem eine hohe Stabilität und Reinheit aufweisen.

Unter Reinheit im Sinne der vorliegenden Erfindung ist gemeint, dass die Anionenaustauscher nicht ausbluten. Das Ausbluten äußert sich in einem Anstieg der Leitfähigkeit von mit dem Ionenaustauscher behandeltem Wasser.

Es wurde nun gefunden und darin besteht die Lösung der Aufgabe, dass monodisperse gelförmige Anionenaustauscher entsprechend grober Körnung mit hoher Stabilität und Reinheit durch ein Seed/Feed-Verfahren unter Verwendung von Polymerisaten mit hoher Quellbarkeit bei niedrigem Gehalt an löslichen Polymeranteilen erhalten werden können, wobei die Feedpolymerisation in zwei oder mehr Schritten, beispielsweise in drei oder vier Schritten ausgeführt wird.

Gegenstand der vorliegenden Erfindung ist ein Verfahren zur Herstellung von monodispersen gelförmigen Anionenaustauschern mit hoher Stabilität, Reinheit und einer Körnung größer 800 µm, dadurch gekennzeichnet, dass man
a.) eine Suspension eines Saatpolymerisats mit einer Teilchengröße von 5 bis 500 µm aus einem vernetzten Polymerisat mit einem Quellungsindex von 2,5 bis 7,5 (gemessen in Toluol) und mit einem Gehalt nicht verdampfbarer extrahierbarer Anteile (gemessen durch Extraktion mit Toluol) von weniger als 1 Gew.-% in einer kontinuierlichen wässrigen Phase ausbildet,
b.) das suspendierte Saatpolymerisat in einem Monomergemisch aus Vinylmonomer, 1 bis 20 Gew.-% Vernetzer und Radikalstarter quellen lässt,
c.) das Monomergemisch im Saatpolymerisat polymerisiert, wobei das Verhältnis von organischer Phase zur Wasserphase 1:5 bis 1:20 beträgt,
d.) das erhaltenene Polymerisat in einem Monomerengemisch aus Vinylmonomer, 1 bis 10 Gew.-% Vernetzer und Radikalstarter erneut quellen lässt,
e.) das zweite Monomergemisch im ersten Seed/Feed-Polymerisat polymerisiert und
f.) das entstandene Copolymerisat mit Quellungsindex 1,5 bis 3 und mittleren Durchmesser größer 520 µm durch mit einer Lewis-Säure katalysierten Chlormethylierung und anschließender Aminierung zum Anionenaustauscher funktionalisiert.

In einer besonderen Ausführungsform der vorliegenden Erfindung wird als Saatpolmerisat in Verfahrensschritt a) ein vernetztes Polymerisat, hergestellt aus
i) 96,5 bis 99,0 Gew.-% Monomer,
ii) 0,8 bis 2,5 Gew.-% Vernetzer und
iii) 0,2 bis 1,0 Gew.% aliphatischer Peroxyester als Polymerisationsinitiator,
verwendet.

Die erfindungsgemäß synthetisierten grobkörnigen gelförmigen Anionenaustauscher weisen Korngrößen zwischen 800 und 1200 µm, bevorzugt zwischen 800 und 1100 µm, besonders bevorzugt zwischen 800 und 900 µm, auf

Monomere (i) zur Herstellung des Saatpolymerisates sind Verbindungen mit einer radikalisch polymerisierbaren C=C-Doppelbindung pro Molekül. Bevorzugte Verbindungen dieser Art umfassen aromatische Monomere wie beispielsweise Vinyl- und Vinylidenderivate des Benzols und des Naphthalins, wie z.B. Vinylnaphthalin, Vinyltoluol, Ethylstyrol, α-Methylstyrol, Chlorstyrole, vorzugsweise Styrol sowie nichtaromatische Vinyl- und Vinylidenverbindungen, wie z.B. Acrylsäure, Methacrylsäure, Acrylsäure-C₁-C₈-alkylester, Methacrylsäure-C₁-C₈-alkylester, Acrylnitril, Methacrylnitril, Acrylamid, Methacrylamid, Vinylchlorid, Vinylidenchlorid und Vinylacetat. Vorzugsweise werden die nicht-aromatischen Monomeren in untergeordneten Mengen, vorzugsweise in Mengen von 0,1 bis 50 Gew.-%, insbesondere 0,5 bis 20 Gew.-%, bezogen auf aromatische Monomere, verwendet. In den meisten Fällen wird man jedoch ausschließlich aromatische Monomere verwenden.

Als Vernetzer (ii) sind Verbindungen geeignet, die zwei oder mehr, vorzugsweise zwei bis vier radikalisch polymerisierbare Doppelbindungen pro Molekül enthalten. Beispielhaft seien genannt: Divinylbenzol, Divinyltoluol, Trivinylbenzol, Divinylnaphthälin, Trivinylnaphthalin, Diethylenglycoldivinylether, Octadien- 1,7, Hexadien-1,5, Ethylenglycoldimethacrylat, Triethylenglycoldimethacrylat, Trimethylolpropantrimethacrylat, Allylmethacrylat oder Methylen-N,N'-bisacrylamid. Divinylbenzol wird als Vernetzer bevorzugt. Für die meisten Anwendungen sind kommerzielle Divinylbenzolqualitäten, die neben den Isomeren des Divinylbenzols auch Ethylvinylbenzol enthalten, ausreichend.

Aliphatische Peroxyester (iii) zur Herstellung der erfindungsgemäß einzusetzenden Saatpolymerisate entsprechen den Formeln (I), (II) oder (III) 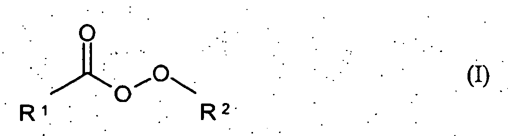 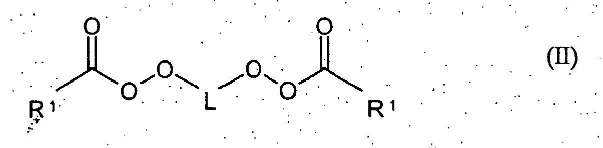 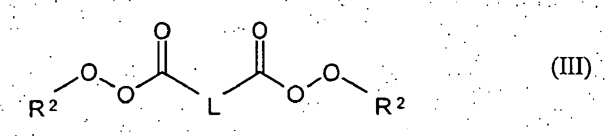 worin
- R¹: für einen Alkylrest mit 2 bis 20 C-Atomen oder einen Cycloalkylrest mit bis zu 20 C-Atomen steht,
- R²: für einen verzweigten Alkylrest mit 4 bis 12 C-Atomen steht und
- L: für einen Alkylenrest mit 2 bis 20 C-Atomen oder einen Cycloalkylenrest mit bis zu 20 C-Atomen steht.

Bevorzugte aliphatische Peroxyester gemäß Formel (I) sind beispielsweise
tert.-Butylperoxyacetat,
tert.-Butylperoxyisobutyrat,
tert.-Butylperoxypivalat,
tert.-Butylperoxyoctoat,
tert.-Butylperoxy-2-ethylhexanoat,
tert.-Butylperoxyneodecanoat,
tert.-Amylperoxyneodecanoat,
tert.-Amylperoxypivalat,
tert.-Amylperoxyoctoat,
tert.-Amylperoxy-2-ethylhexanoat und
tert.-Amylperoxyneodecanoat.

Bevorzugte aliphatische Peroxyester gemäß Formel (II) sind beispielsweise
2,5-Bis(2-ethylhexanoylperoxy)-2,5-dimethylhexan,
2,5-Dipivaloylperoxy-2,5-dimethylhexan und
2,5-Bis(2-neodecanoylperoxy)-2,5-dimethylhexan.

Bevorzugte aliphatische Peroxyester gemäß Formel (III) sind beispielsweise
Di-tert.-butylperoxyazelat und
Di-tert.-amylperoxyazelat.

Erfindungsgemäß können aber auch aromatische Diperoxide als Radikalstarter eingesetzt werden, z.B. Dibenzoylperoxid.

In einer weiteren besonderen Ausführungsform des Verfahrensschritts a) der vorliegenden Erfindung ist das Saatpolymerisat mikroverkapselt und wird durch Verdüsung hergestellt. Dabei ist besonders vorteilhaft, die Komponenten zur Herstellung des Saatpolymerisates Monomer (i), Vernetzer (ii) und aliphatischer Peroxyester als Polymerisationsinitiator (iii) mikrozuverkapseln und die mikroverkapselten Partikel zum Saatpolymerisat auszupolymerisieren.

Für die Mikroverkapselung kommen die für diesen Einsatzzweck bekannten Materialien in Frage, insbesondere Polyester, natürliche und synthetische Polyamide, Polyurethane, Polyharnstoffe. Als natürliches Polyamid ist Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine und synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid oder Methacrylamid. Gelatinehaltige Kapseln können mit üblichen Härtungsmitteln wie beispielsweise Formaldehyd oder Glutardialdehyd gehärtet werden. Die Verkapselung von Monomertröpfchen beispielsweise mit Gelatine, gelatinehaltigen Koazervaten oder gelatinehaltigen Komplexkoazervaten, wird in EP-A-0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente (beispielsweise ein Isocyanat oder ein Säurechlorid) mit einer zweiten in der wässrigen Phase gelösten Reaktivkomponente (beispielsweise einem Amin) zur Reaktion gebracht wird. Die Mikroverkapselung mit gelatinehaltigem Komplexkoazervat ist erfindungsgemäß bevorzugt.

Die Polymerisation der mikroverkapselten Tröpfchen aus Monomer (i), Vernetzer (ii) und aliphatischem Peroxyester (iii) zum Saatpolymerisat erfolgt in wässriger Suspension, wobei es vorteilhaft ist, einen in der wässrigen Phase gelösten Inhibitor einzusetzen. Als Inhibitoren kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit. Beispiele für organische Inhibitoren sind phenolische Verbindungen wie Hydrochinon, Hydrochinonmonomethylether, Resorcin, Brenzkatechin, tert.-Butylbrenzkatechin, Kondensationsprodukte aus Phenolen mit Aldehyden. Weitere organische Inhibitoren sind stickstoffhaltige Verbindungen wie beispielsweise Diethylhydroxylamin oder Isopropylhydroxylamin. Resorcin wird erfindungsgemäß als Inhibitor bevorzugt. Die Konzentration des Inhibitors beträgt 5 bis 1000 ppm, vorzugsweise 10 bis 500 ppm, besonders bevorzugt 20 bis 250 ppm, bezogen auf die wässrige Phase.

Das Saatpolymerisat wird nach der Polymerisation aus der wässrigen Suspension isoliert und getrocknet, vorzugsweise auf einen Wassergehalt von weniger als 0,5 Gew.-%.

Die Teilchengröße des erfindungsgemäß einzusetzenden Saatpolymerisates beträgt 5 bis 500 µm, vorzugsweise 20 bis 400 µm, besonders bevorzugt 100 bis 300 µm. Die Teilchengrößenverteilungskurve muss der des gewünschten Anionenaustauschers in den einzelnen Syntheseschritten entsprechen. Zur Herstellung eines engverteilten bzw. monodispersen Ionenaustauschers muss ein engverteiltes bzw. monodisperses Saatpolymerisat verwendet werden.

Das getrocknete Saatpolymerisat wird gemäß Verfahrensschritt a) in einer wässrigen Phase suspendiert, wobei das Verhältnis von Saatpolymerisat und Wasser zwischen 1:5 und 1:20 liegen kann. Bevorzugt wird 1:5 bis 1:10. Die Anwendung eines Hilfsmittels, beispielsweise eines Tensides oder eines Schutzkolloides ist nicht notwendig. Das Suspendieren kann beispielsweise mit Hilfe eines normalen Rührers erfolgen, wobei niedrige bis mittlere Scherkräfte angewendet werden.

Zu dem suspendierten Saatpolymerisat wird in Verfahrensschritt b) eine Mischung aus Monomer (a), Vernetzer (aa) und Radikalstarter (aaa) ("feed 1") hinzugegeben Als Monomer (a) sind die bereits oben genannten Monomere (i), nämlich Styrol, Vinyltoluol, Ethylstyrol, alpha-Methylstyrol, Chlorstyrol, Acrylsäure, Methacrylsäure, Acrylsäureester, Methacrylsäureester, Acrylnitril, Methacrylnitril, Acrylamid, Methacrylamid sowie Gemische aus diesen Monomeren geeignet. Bevorzugt wird Styrol eingesetzt.

Als Vernetzer (aa) seien Divinylbenzol, Divinyltoluol, Trivinylbenzol, Divinylnaphthalin, Trivinylnaphthalin, Diethylenglycoldivinylether, Octadien-1,7, Hexadien-1,5, Ethylenglycoldimethacrylat, Triethylenglycoldimethacrylat, Trimethylolpropantrimethacrylat, Allylmethacrylat oder Methylen-N,N'-bisacrylamid genannt. Divinylbenzol wird erfindungsgemäß bevorzugt. Für die meisten Anwendungen sind kommerzielle Divinylbenzolqualitäten, die neben den Isomeren des Divinylbenzols auch Ethylvinylbenzol enthalten, ausreichend.

Der Gehalt an Vernetzer im Monomergemisch des feed beträgt 1 bis 20 Gew.-%, vorzugsweise 0,5 bis 5 %

Für das erfindungsgemäße Verfahren geeignete Radikalstarter (aaa) sind beispielsweise Peroxyverbindungen wie Dibenzoylperoxid, Dilauroylperoxid, Bis(p-chlorbenzoyl)peroxid, Dicyclohexylperoxydicarbonat, tert.-Butylperoctoat, 2,5-Bis(2-ethylhexanoylperoxy)-2,5-dimethylhexan und tert.-Amylperoxy-2-ethylhexan, desweiteren Azoverbindungen wie 2,2'-Azobis(isobutyronitril) und 2,2'-Azobis(2-methylisobutyronitril) oder die bereits beschriebenen aliphatischen Peroxyester. Die Radikalstarter werden im Allgemeinen in Mengen von 0,05 bis 2,5, vorzugweise 0,2 bis 1,5 Gew.-%, bezogen auf die Mischungen aus Monomer (a) und Vernetzer (aa), angewendet.

Das Verhältnis von Saatpolymerisat zu zugesetzter Mischung (Seed/Feed-Verhältnis) beträgt im Allgemeinen 1:0,5 bis 1:20, vorzugsweise 1:0,75 bis 1:10; besonders bevorzugt 1:1 bis 1:5. Die zugesetzte Mischung quillt in das Saatpolymerisat ein. Die maximale Feed-Menge, die von der Saat vollständig aufgenommen wird, hängt in starkem Maße vom Vernetzergehalt der Saat ab. Bei gegebener Teilchengröße des Saatpolymerisates lässt sich durch das Seed/Feed-Verhältnis die Teilchengröße des entstehenden Copolymerisates einstellen.

Die Polymerisation des gequollenen Saatpolymerisates im Verfahrensschritt c) zum Copolymerisat kann in Anwesenheit eines oder mehrerer Schutzkolloide und gegebenenfalls eines Puffersystems erfolgen. Als Schutzkolloide sind natürliche und synthetische wasserlösliche Polymere, wie beispielsweise Gelatine, beispielsweise Gelatine vom Typ A, Stärke, Polyvinylalkohol, Polyvinylpyrrolidon, Polyacrylsäure, Polymethacrylsäure oder Copolymerisate aus (Meth)acrylsäure oder (Meth)-acrylsäureestern geeignet. Besonders gut geeignet sind Cellulosederivate, insbesondere Celluloseester oder Celluloseether, wie Carboxymethylcellulose, Hydroxyethylcellulose oder Methylhydroxyethylcellulose. Cellulosederivate sind als Schutzkolloid bevorzugt. Die Einsatzmenge der Schutzkolloide beträgt im Allgemeinen 0,05 bis 1 Gew.-%, bezogen auf die Wasserphase, vorzugsweise 0,1 bis 0,5 Gew.-%. Bevorzugt geeignet sind Carboxymethylcellulosen mit reversibler Ausfalltemperatur.

Die Polymerisation kann in Anwesenheit eines Puffersystems durchgeführt werden. Bevorzugt werden Puffersysteme, die den pH-Wert der Wasserphase zu Beginn der Polymerisation auf einen Wert zwischen 14 und 6, vorzugsweise zwischen 13 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Erfindungsgemäß besonders gut geeignete Puffersysteme enthalten Phosphat- oder Boratsalze.

Das Verhältnis von organischer Phase zur Wasserphase beträgt bei der Polymerisation in Verfahrensschritt c) der gequollenen Saat 1:5 bis 1:20, vorzugsweise 1:5 bis 1:10.

Die Temperatur bei der Polymerisation des gequollenen Saatpolymerisats richtet sich nach der Zerfallstemperatur des eingesetzten Initiators (aaa). Sie liegt im Allgemeinen zwischen 50 bis 100°C, vorzugsweise zwischen 55 und 90°C. Die Polymerisation dauert 1 bis einige Stunden. Es hat sich bewährt, das Verfahren prozessgesteuert mittels eines Temperaturprogramms durchzuführen, bei dem die Polymersation bei niedriger Temperatur, beispielsweise 63°C begonnen wird und mit fortschreitendem Polymerisationsumsatz die Reaktionstemperatur gesteigert wird. Auf diese Weise lässt sich das Verfahren sicher und mit hohem Polymerisationsumsatz durchführen.

Nach der Polymerisation kann das Copolymerisat mit üblichen Methoden beispielsweise durch Filtrieren oder Dekantieren isoliert und gegebenenfalls nach ein oder mehreren Wäschen getrocknet und falls gewünscht gesiebt und wieder eingesetzt werden.

Im erfindungsgemäßen Verfahren verbleibt das Copolymerisat jedoch in der wässrigen Phase und wird ohne Auftrennung der Phasen fest-flüssig im Verfahrensschritt d) und e) erneut einer Feedpolymerisation unterworfen.

Zu der Polymerisatsuspension wird im Verfahrensschritt d) erneut eine Mischung von Monomer (a), Vernetzer (aa) und Radikalstarter (aaa) ("feed 2") hinzugegeben. Die möglichen Substanzen sind die gleichen wie die beim ersten Feedschritt beschriebenen

Das Verhältnis vom ersten Feedpolymer zu zugesetzter Mischung beträgt im Allgemeinen 1:0,5 bis 1:10, besonders bevorzugt 1:1 bis 1:5. Der Vernetzergehalt im zweiten Monomergemisch beträgt 1 bis 10 Gew.-%. Die maximale Feedmenge, die vom ersten Feedpolymer aufgenommen wird, hängt von dessen Gesamtvernetzung ab.

Überraschenderweise wurde dabei gefunden, dass bei gegebener Teilchengröße des Feedpolymers sich die Teilchengröße des Zielcopolymeren durch das Seed/Feed-Verhältnis einstellen lässt. Überraschend war zudem, dass daraus sich wiederum durch gezielte Einstellung des Chlorwertes des Zwischenproduktes Chlormethylat und vollständiger Aminierung die gewünschte Korngröße des Endproduktes einstellen lässt.

Die Polymerisation des gequollenen Feedpolymeren erfolgt deshalb vorteilhafterweise in der gleichen wässrigen Phase wie die erste Feedpolymerisation. Die erneute Zugabe eines Schutzkolloides nach erfolgter Einquellphase, die den Gegebenheiten angepasst werden muss, ist möglich. Auch hier sind die bereits erwähnten Schutzkolloide einsetzbar.

Die Polymerisationstemperatur im Verfahrensschritt e) richtet sich nach der ZerfallsTemperatur des eingesetzten Initiators. Sie liegt vorzugsweise zwischen 55 und 90°C. Die Polymerisation dauert mehrere Stunden. Auch hier hat sich bewährt die Polymerisation piozessgesteuert also mittels eines Programms beginnend bei niedrigeren und endend bei höheren Temperaturen entsprechend der Polymerisationsumsätze abzufahren.

Erfindungsgemäß kann der Schritt der Feedzugabe mehrfach wiederholt werden. Das erfindungsgemäße Verfahren kann aber auch nach der zweiten Feedpolymerisation beendet und das Polymerisat durch Dekantieren, Waschen, Filtrieren, Trocknen und gegebenenfalls Sieben aufgearbeitet werden. In diesem Fall zeichnen sich die Polymerisate der Feedschritte 1 und 2 durch Quellungsindizes 2,5 bis 3,5 und 1,75 bis 2,5 und durch Körnungsbereiche 380 bis 420 und 560 bis 600 µm aus.

Die Umsetzung der Copolymerisate zum Anionenaustauscher gemäß Verfahrensschritt f) erfolgt durch Chlormethylierung und anschließende Aminierung.

Zur Chlormethylierung wird vorzugsweise Chlormethylmethylether eingesetzt. Der Chlormethylmethylether kann in technischer Qualität eingesetzt werden, wobei er als Nebenkomponenten beispielsweise Methylal oder Formaldehyd enthalten kann. Der Chlormethylmethylether wird im Überschuss eingesetzt und wirkt erfindungsgemäß nicht nur als Reaktant sondern auch als Suspensions- und Quellmittel. Die Anwendung eines zusätzlichen Suspensionsmittels ist daher im Allgemeinen nicht erforderlich. Erfindungsgemäß bevorzugt wird ein Chlormethylierungsgrad von 80-90% angestrebt

Die Chlormethylierungsreaktion wird erfindungsgemäß durch Zugabe einer Lewis-säure katalysiert. Geeignete Katalysatoren sind beispielsweise Eisen(III)chlorid, Zinkchlorid, Zinn(IV)chlorid und Aluminiumchlorid, bevorzugt wird Eisen(III)-chlorid als 35 - 45 %ige wässrige Lösung. Die Reaktionstemperatur kann im Bereich von 40 bis 80°C liegen. Bei druckloser Fahrweise ist ein Temperaturbereich von 50 bis 60°C besonders günstig, bevorzugt 50 - 55°C. Während der Reaktion können die flüchtigen Bestandteile, wie Salzsäure, Methylal, Formaldehyd und teilweise Chlormethylmethylether durch Abtreiben entfernt werden. Zur Entfernung des eingequollenen Chlormethylmethylethers sowie zur Reinigung des Chlormethylats kann nach Abtrennen der Reaktionslösung mit Methylal, Methanol und schließlich mit Wasser gewaschen werden.

Zur Herstellung der erfindungsgemäß herzustellenden Anionenaustauscher wird das chlormethylierte Copolymerisat mit Quellungsindex 1,5 bis 3 und einem mittleren Durchmesser größer 520 µm mit Aminen umgesetzt. Erfindungsgemäß lassen sich grobkörnige monodisperse schwachbasische Anionenaustauscher und grobkörnige monodisperse, starkbasische Anionenaustauscher mit einer Körnung größer 800 µm herstellen.

Zur Herstellung von schwachbasischen Anionenaustauschern wird das chlormethylierte Copolymerisat mit Ammoniak, einem primären Amin wie Methyl- oder Ethylamin oder einem sekundären Amin wie Dimethylamin umgesetzt.

Die Umsetzung mit tertiären Aminen führt zu starkbasischen Anionenaustauschern. Geeignete tertiäre Amine sind Trimethylamin, Dimethylaminoethanol, Triethylamin, Tripropylamin und Tributylamin. Auch der Einsatz von Polyaminen wie Ethylendiamin oder Dimethylaminopropylamin ist möglich

Zur vollständigen Umsetzung des chlormethylierten Copolymerisates sind mindestens 1 mol Amin, bezogen auf 1 mol Chlor im Chlormethylat erforderlich. Bevorzugt wird ein leichter Aminüberschuss. Besonders bevorzugt sind 1,1 bis 1,3 mol Amin pro mol Chlor.

Die Aminierungsreaktion kann vorteilhafterweise in Anwesenheit von Wasser erfolgen. Dabei erfüllt das Wasser verschiedene Aufgaben. Es ist Suspensionsmedium, Lösemittel für das Amin und Quellmittel für den entstehenden Anionenaustauscher zugleich. Während der Aminierung nimmt das Harz kontinuierlich Wasser auf und quillt hierbei auf. Daher ist eine Mindestmenge Wasser notwendig, um den Ansatz rührfähig zu halten. Es gibt keine besondere Obergrenze für die erfindungsgemäß einzusetzende Wassermenge. Allerdings sind sehr hohe Wassermengen ungünstig, da infolge der Aminverdünnung die Raum/Zeit-Ausbeute erniedrigt wird. Pro Gramm chlormethyliertes Copolymerisat sollen mindestens 1,5 Gramm, bevorzugt 2 bis 4 Gramm Wasser eingesetzt werden

Das Reaktionsgemisch kann untergeordnete Mengen an Lösungsmittel, wie Methanol oder Methylal enthalten. So ist es nicht störend, wenn ein methanolfeuchtes chlormethyliertes Copolymerisat eingesetzt wird. Vorzugsweise wird jedoch kein organisches Lösungsmittel zugesetzt. In einer besonderen Ausführungsform können auch mit dem Chlormethylat quellende Lösungsmittel benutzt werde.

In einer bevorzugten Ausführungsform der vorliegenden Erfindung wird die Aminierung in Gegenwart von in Wasser gelöstem anorganischem Salz durchgeführt. Geeignete Salze sind wasserlösliche Halogenide, Carbonate oder Sulfate von Alkalimetallen wie Natrium oder Kalium und von Erdalkalimetallen wie Magnesium oder Calcium. Bevorzugt wird Natriumchlorid eingesetzt.

Das anorganische Salz wird in einer Menge von weniger als 5 Gewichtsprozent, bezogen auf die Gesamtmenge Wasser eingesetzt. Bevorzugt werden 1 bis 4,5 Gew.-%, insbesondere bevorzugt 1,5 bis 4 Gew.-%, anorganisches Salz, bezogen auf die Gesamtmenge Wasser, eingesetzt. Die Gesamtmenge Wasser ergibt sich aus der Summe zugesetzten Wassers und der in der wässrigen Aminlösung eingebrachten Wassermenge, falls mit wässriger Aminlösung gearbeitet wird.

Die Temperatur, bei der die Aminierung durchgeführt wird, kann im Bereich zwischen Raumtemperatur und 160°C liegen. Bevorzugt wird bei Temperaturen zwischen 40 und 120°C, besonders bevorzugt im Bereich zwischen 50 und 90°C, gearbeitet.

Nach der Aminierung wird der erhaltene Anionenaustauscher gewaschen und anschließend in verdünnter Salzsäure (1 bis 10 %ig) bei Temperaturen von 20 bis 120°C, vorzugsweise von 50 bis 90°C behandelt. Das Produkt wird beispielsweise durch Absetzenlassen oder Filtrieren isoliert und zur weiteren Reinigung mit Wasser gewaschen.

Die vorliegende Erfindung betrifft aber auch schwachbasische, gemischtbasische oder starkbasische, monodisperse, gelförmige Anionenaustauscher, mit einer Korngröße von mehr als 800 µm, erhältlich durch
a) Ausbilden einer Suspension eines Saatpolymerisats aus einem vernetzten Polymerisat mit einem Quellungsindex von 2,5 bis 7,5 (gemessen in Toluol) und mit einem Gehalt nicht verdampfbarer Anteile (gemessen durch Extraktion mit Toluol) von weniger als 1 Gew.-%, bevorzugt in einer kontinuierlichen wässrigen Phase,
b) Quellen des suspendierteri Saatpolymerisates in einem Monomergemisch aus Vinylmonomer, Vernetzer und Radikalstarter,
c) Polymerisieren des Monomergemisches im Saatpolymerisat,
d) erneutes Quellen des erhaltenenen Polymerisates in einem Monomerengemisch aus Vinylmonomer, Vernetzer und Radikalstarter,
e) Polymerisieren des zweiten Monomergemisches im ersten Seed/Feed-Polymerisat und
f) Funktionalisieren des entstandenen Copolymerisates mit Quellungsindex 1,5 bis 3 und mittlerem Durchmesser größer 520 µm durch Chlormethylierung und anschließender Aminierung.

Die erfindungsgemäßen Anionenaustauscher können gegebenenfalls auf bekanntem Wege durch Austausch des Chloridions gegen ein anderes Gegenion in andere Formen überführt werden. Die nach dem erfindungsgemäßen Verfahren erhaltenen monodispersen gelförmigen Anionenaustauscher zeichnen sich trotz ihrer groben Körnung von mehr als 800 µm durch eine besonders hohe Stabilität und Reinheit aus. Hauptanwendungsgebiete dieser Anionenaustauscher sind die Extraktion und Rückgewinnung von anionischen Schwermetallkomplexen, der Einsatz in hydrometallurgischen Prozessen beispielsweise der Urangewinnung, die Rückgewinnung von Edelmetallen durch irreversible Adsorption ihrer Chloro-, Sulfato- oder Cyanidkomplexe, Behandlung von Beizbädern; beispielsweise die Entfernung von Eisen aus Chlorwasserstoffsäure. Sie zeigen auch nach längerem Gebrauch und vielfacher Regeneration keine Defekte an den lonenaustauscherkugeln und kein Ausbluten (Leaching) des Austauschers.

Die Analyse der Produkte ergab, dass durch die Mehrfachfeedung im Polymer Verschlaufungen entstehen, die stabil sind und somit zu einer Verbesserung der mechanischen und osmotischen Stabilität der grobkörnigen Anionenaustauscher führen bei gleichzeitiger Einsparung an Vernetzerkomponente im Herstellungsprozess.

Die erfindungsgemäßen monodispersen gelförmigen Anionenaustauscher eignen sich hervorragend für die Gasadsorption, Katalyse und in der Hydrometallurgie. Aufgrund äußerst günstiger Stabilitätswerte von 1200 bis 700 im Chattilontest eignen sich die erfindungsgemäßen monodispersen gelförmigen Anionenaustauscher insbesondere zur Uranadsorption aus Harzpulpen.

### Beispiele

### Unterschungsmethoden:

### Nicht verdampfbare extrahierbare Anteile im Saatpolymerisat

Zur Bestimmung der nicht verdampfbaren und extrahierbaren Anteile wurden 5 bis 7 g Saatpolymerisat in eine Extraktionshülse eingewogen und über Nacht in einer Soxhlet-Apparatur mit 800 ml Toluol extrahiert (Badtemperatur: 140°C). Das Extrakt wurde über eine Nutsche mit Schwarzbandfilter filtriert und am Rotationsverdampfer auf ca. 1 ml eingeengt. Anschließend wurden 300 ml Methanol zugesetzt und im Vakuum am Rotationsverdampfer bis zur Gewichtskonstanz getrocknet. Von jeder Probe wurde eine Doppelbestimmung durchgeführt.

### Quellung von Saatpolymerisat

Die Quellung der Saatpolymerisate wurde in Toluol untersucht. Dazu wurden 10 ml getrocknetes, gesiebtes Perlpolymerisat in einem 100 ml-Standzylinder eingewogen. Der Quotient aus dem Volumen der Schüttung (V₀) und der eingewogenen Menge (m) ergab das Schüttvolumen (V_{sch}). Der Standzylinder wurde mit dem Quellmittel auf 100 ml aufgefüllt und 10 bis 20 h stehengelassen. Dabei wurde öfter geschüttelt und darauf geachtet, dass evtl. auftretende Luftblasen entweichen können. Das Volumen der gequollenen Schüttung wurde abgelesen und ergab V₁. Der Quotient aus V₁ und V₀ ist definitionsgemäß der Volumen-Quellungsindex (QI/_{v/v}).

### Anzahl perfekter Perlen nach Herstellung

100 Perlen werden unter dem Mikroskop betrachtet. Ermittelt wird die Anzahl der Perlen, die Risse tragen oder Absplitterungen zeigen. Die Anzahl perfekter Perlen ergibt sich aus der Differenz der Anzahl beschädigter Perlen zu 100.

### Beispiel 1

### a.) Herstellung eines Saatpolymerisates

In einem 4 l Glasreaktor werden 1960 ml entionisiertes Wasser vorgelegt. Hierin werden 630 g einer mikroverkapselten Mischung aus 1,0 Gew.-% Divinylbenzol, 0,2 Gew.-% Ethylstyrol (eingesetzt als handelsübliches Gemisch aus Divinylbenzol und Ethylstyrol mit 80 Gew.-% Divinylbenzol), 0,5 Gew.-% tert.-Butylperoxy-2-ethylhexanoat und 98,8 Gew.-% Styrol gegeben, wobei die Mikrokapsel aus einem mit Formaldehyd gehärteten Komplexkoazervat aus Gelatine und einem Acrylamid/Acrylsäure-Copolymerisat besteht. Die mittlere Teilchengröße beträgt 300 µm. Die Mischung wird mit einer Lösung aus 2,4 g Gelatine, 4 g Natriumhydrogenphosphatdodekahydrat und 100 mg Resorcin in 80 ml entionisiertem Wasser versetzt, langsam gerührt und unter Rühren 10 h bei 75°C polymerisiert. Anschließend wird durch Temperaturerhöhung auf 95°C auspolymerisiert. Der Ansatz wird über ein 32 µm-Sieb gewaschen und getrocknet. Man erhält 605 g eines kugelförmigen, mikroverkapselten Polymerisats mit glatter Oberfläche. Die Polymerisatkugeln erscheinen optisch transparent. Das Saatpolymerisat hat eine Volumen-Quellung von 700 ml/100 g Polymerisat und einen mittleren Durchmesser von 290 µm.

### b.) Herstellung eines Copolymerisats

### 1. Feedung

In einem 4 l Glasreaktor werden 200 g Saatpolymerisat aus (a) und eine wässrige Lösung aus 1760 g entionisiertem Wasser 5,75 g Borsäure und 1,59 g Natriumhydroxid eingefüllt und die Rührgeschwindigkeit auf 220 UpM (Umdrehungen pro Minute) eingestellt. Innerhalb von 45 min wird ein Gemisch aus 395 g Styrol, 50 g Divinylbenzol (80,0 gew.-%ig) und 4 g Dibenzoylperoxid (75 gew.-%ig, wasserfeucht) als Feed zugesetzt. Das Gemisch wird 180 min bei Raumtemperatur gerührt, wobei der Gasraum 15 min mit Stickstoff gespült wird. Danach werden 195 g einer 2 %igen wässrigen Lösung von Methylhydroxyethylcellulose in entionisiertem Wasser zugesetzt. Der Ansatz wird innerhalb von 90 min auf 63°C aufgeheizt und 10 Stunden bei dieser Temperatur belassen, anschließend wird innerhalb von 90 min aufgeheizt und 2 Stunden auf 95°C erwärmt. Der Ansatz verbleibt nach dem Abkühlen im Reaktionsgefäß. Das Polymer hat eine Volumenquellung von 510ml/100 g Polymerisat und besitzt einen mittleren Durchmesser von 410 µm.

### 2. Feedung

Der in der Polymerisationsapparatur verbliebene Ansatz wird einem zweiten Feedschritt unterworfen. Dazu werden in die gerührte Suspension eine Ölphase, bestehend aus 1128,2 g Styrol; 71,8 g Divinylbenzol (80 %-ig) und 10 g Dibenzoylperoxid über einen Zeitraum von 45 Minuten dosiert. Das Gemisch wird 6 Stunden bei Raumtemperatur gerührt, anschließend werden 195,2 g einer 2 %-igen wässrigen Lösung von Methylhydroxyethylcellulose zugegeben und in 90 Minuten auf 63°C geheizt und 10 Stunden bei dieser Temperatur gehalten. Danach wird in 60 Minuten auf 95°C geheizt und 2 Stunden bei 95°C ausgehärtet. Nach 3-stündiger Abkühlung wird der Ansatz viermal mit vollentsalztem Wasser dekantiert, abgesaugt und 4 Stunden bei 70°C getrocknet.
Ausbeute: 1696 g
Quellung: 340 ml/100 g Polymerisat
mittlerer Durchmesser: 580 µm

### c.) Chlormethylierung des Copolymerisates

In einem 250 ml Sulfierkolben werden 140 ml einer Mischung aus Monochlordimethylether, Methylal und Eisen(III)chlorid (14,8 g/l) vorgelegt und anschließend 30 g Copolymerisat aus b.) 2. Feedung zugegeben. Das Gemisch wird in 3 h auf 50°C erhitzt. Anschließend rührt man weitere 6 h unter Rückfluss im Bereich von 50-55°C nach. Während der Reaktionszeit werden Salzsäure und leichtsiedende Organika abgetrieben. Anschließend wird die Reaktionssuspension mit 150 ml Methanol, anschließend mit Methylal , dann 3 x mit Methanol und mit entionisiertem Wasser intensiv gewaschen. Man erhält 74 ml wasserfeuchtes, chlormethyliertes Perlpolymerisat.
Chlorgehalt: 18,7%

### d.) Herstellung eines starkbasischen Anionenaustauschers Typ I

Im Autoklav werden 600 ml entionisiertes Wasser vorgelegt. Darin löst man 15 g Natriumchlorid. Dazu werden 70 ml nutsch(wasser)feuchtes, chlormethyliertes Perlpolymerisat und 100 g 45 gew.-%ige wässrige Trimethylaminlösung gegeben. Die Suspension wird in 1,5 h auf 70°C erhitzt, weitere 2 Stunden bei 70°C gerührt, in einer weiteren Stunde auf 80°C erhitzt und weitere 2 Stunden bei 80°C gehalten. Nach dem Abkühlen auf Raumtemperatur wird die Mutterlauge abgesaugt, das Harz wird mit 800 ml vollentsalztem Wasser versetzt und 30 min bei Raumtemperatur gerührt. Das Wasser wird abgetrennt und durch 1000 ml 3 gew.-%ige wässrige Salzsäure ersetzt. Die Suspension wird 4 h bei 70°C gerührt. Nach dem Abkühlen wird die Flüssigkeit abgetrennt, das Harz wird mit Wasser aufgenommen und mit vollentsalztem Wasser bis zur Neutralität gewaschen.

| | |
|---|---|
| Ausbeute: 167 ml Anionenaustauscher in der Cl-Form | |
| Austauschkapazität: | 1,28 eq/l |
| Anzahl perfekter Perlen nach Herstellung | 95/100 |
| mittlerer Durchmesser | 879 µm |
| mittlerer Durchmesser ± 50 µm | 86,5 % |
| Kugeln > 800 µm | 97,5 % |

### Beispiel 2 (erfindungsgemäß)

### Herstellung eines starkbasischen Anionenaustauschers Typ II

In einem Vierhalskolben werden 1500 ml entionisiertes Wasser vorgelegt. Darin löst man 70 g Natriumchlorid. Dazu werden 800 ml nutsch(wasser)feuchtes,chlormethyliertes Perlpolymerisat hergestellt analog Beispiel 1 mit einem Chlorgehalt von 19,51 Gew.-% und 312 g Dimethylaminoethanol gegeben. Die Suspension wird in 2 h auf 90°C erhitzt und weitere 2 Stunden bei 90°C und 6 h bei 95°C gerührt. Nach dem Abkühlen auf Raumtemperatur wird die Mutterlauge abgesaugt, das Harz wird mit 1600 ml vollentsalztem Wasser nachgewaschen. Anschließend wird in 1600 ml 3 gew.-%ige wässrige Salzsäure 4 h bei 70°C gerührt. Nach dem Abkühlen wird die Flüssigkeit abgetrennt, das Harz mit Wasser aufgenommen und in einer Säule von unten mit 6 Bettvolumina entionisiertem Wasser eluiert.

| | |
|---|---|
| Ausbeute: 1710 ml Harz eingerüttelt. | |
| Austanschkapazität | 1,32 eq/l |
| Anzahl perfekter Perlen nach Herstellung | 98/100 |
| mittlerer Durchmesser | 888 µm |
| mittlerer Durchmesser ± 50 µm | 83,4% |
| Kugeln > 800 µm | 96,8 % |

## Patentansprüche

1. Verfahren zur Herstellung von monodispersen gelförmigen Anionenaustauschern mit hoher Stabilität, Reinheit und einer Körnung größer 800 µm, **dadurch gekennzeichnet, dass** man
a.) eine Suspension eines Saatpolymerisats mit einer Teilchengröße von 5 bis 500 µm aus einem vernetzten Polymerisat mit einem Quellungsindex von 2,5 bis 7,5 (gemessen in Toluol) und mit einem Gehalt nicht verdampfbarer, extrahierbarer Anteile (gemessen durch Extraktion mit Toluol) von weniger als 1 Gew.-% in einer kontinuierlichen wässrigen Phase ausbildet,
b.) das suspendierte Saatpolymerisat in einem Monomergemisch aus Vinylmonomer, 1 bis 20 Gew.% Vernetzer und Radikalstarter quellen lässt,
c.) das Monomergemisch im Saatpolymerisat polymerisiert, wobei das Verhältnis von organischer Phase zur Wasserphase 1:5 bis 1:20 beträgt,
d.) das erhaltenene Polymerisat in einem Monomerengemisch aus Vinylmonomer, 1 bis 10 Gew.-% Vernetzer und Radikalstarter erneut quellen lässt,
e.) das zweite Monomergemisch im ersten Seed/Feed-Polymerisat polymerisiert und
f.) das entstandene Copolymerisat mit Quellungsindex 1,5 bis 3 und mittleren Durchmesser größer 520 µm durch mit einer Lewis-Säure katalysierten Chlormethylierung und anschließender Aminierung zum Anionenaustauscher funktionalisiert.

2. Verfahren nach Anspruch 1, **dadurch gekennzeichnet, dass** das Seedpolymerisat ein vernetztes Polymerisat, hergestellt aus
i) 96,5 bis 99,0 Gew.% Monomer
ii) 0,8 bis 2,5 Gew.% Vernetzer und
iii) 0,2 bis 1,0 Gew.% aliphatischer Peroxyester als Polymerisationsinitiator
ist.

3. Verfahren nach Anspruch 2, **dadurch gekennzeichnet, dass** der aliphatische Peroxyester den Formeln (I), (II) oder (III) 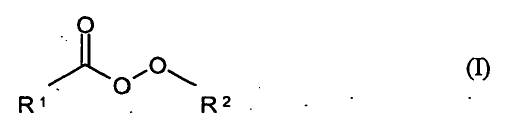 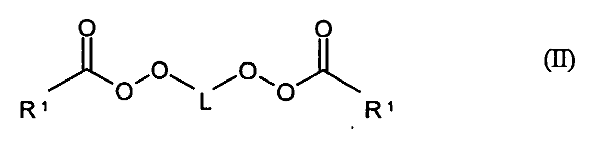 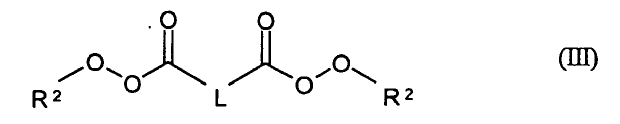 entspricht, worin
R¹ für einen Alkylrest mit 2 bis 20 C-Atomen oder einen Cycloalkylrest mit bis zu 20 C-Atomen steht,
R² für einen verzweigten Alkylrest mit 4 bis 12 C-Atomen steht und
L für einen Alkylenrest mit 2 bis 20 C-Atomen oder einen Cycloalkylenrest mit bis zum 20 C-Atomen steht.

4. Verfahren nach Anspruch 2, **dadurch gekennzeichnet, dass** das Saatpolymerisat durch Verdüsung und Mikroverkapselung hergestellt wird, monodispers ist und einen Quellungsindex von 2,5 bis 7,5 aufweist.

5. Verfahren nach Anspruch 1, **dadurch gekennzeichnet, dass** die Feedpolymerisation in mindestens zwei oder mehr Schritten ausgeführt wird.

6. Verfahren nach Anspruch 5, **dadurch gekennzeichnet, dass** die Feedpolymerisationen ohne Auftrennung der Phasen fest-flüssig hintereinander erfolgt.

7. Verfahren nach Anspruch 5, **dadurch gekennzeichnet, dass** der Radikalstarter der Feedpolymerisation ein aliphatischer Peroxyester oder ein aromatisches Diperoxid ist.

8. Verfahren nach Anspruch 5, **dadurch gekennzeichnet, dass** als Schutzkolloide der Feedschritte reversible Methylhydroxyethylcellulose oder Gelatine vom Typ A verwandt wird.

9. Verfahren nach Anspruch 5, **dadurch gekennzeichnet, dass** die Feedschritte 1 und 2 durch die Quellungsindizes 2,5 bis 3,5 und 1,75 bis 2,5 und Kömungsbereiche 380 bis 420 und 560 bis 600 µm charakterisiert sind.

10. Verfahren nach Anspruch 1, **dadurch gekennzeichnet, dass** der Chlormethylierungsgrad 80 - 90 % beträgt und die Aminierung in Gegenwart von weniger als 5 Gew. % bezogen auf die Gesamtmenge Wasser eines anorganischen Salzes erfolgt.

11. Monodisperse gelförmige Anionenaustauscher mit hoher Stabilität, Reinheit und einer Körnung größer 800 µm, erhältlich durch
a.) Ausbilden einer Suspension eines Saatpolymerisats mit einer Teilchengröße von 5 bis 500 µm aus einem vernetzten Polymerisat mit einem Quellungsindex von 2,5 bis 7,5 (gemessen in Toluol) und mit einem Gehalt nicht verdampfbarer, extrahierbarer Anteile (gemessen durch Extraktion mit Toluol) von weniger als 1 Gew.-% in einer kontinuierlichen wässrigen Phase,
b.) Quellen des suspendierten Saatpolymerisats in einem Monomergemisch aus Vinylmonomer, 1 bis 20 Gew.-% Vernetzer und Radikalstarter,
c.) Polymerisieren des Monomergemisches im Saatpolymerisat, wobei das Verhältnis von organischer Phase zur Wasserphase 1:5 bis 1:20 beträgt,
d.) erneutes Quellen des erhaltenenen Polymerisates in einem Monomerengemisch aus Vinylmonomer, 1 bis 10 Gew.-% Vernetzer und Radikalstarter,
e.) Polymerisieren des zweiten Monomergemisches im ersten Seed/Feed-Polymerisat und
f.) Funktionalisieren des entstandenen Copolymerisats mit Quellungsindex 1,5 bis 3 und mittleren Durchmesser größer 520 µm durch mit einer Lewis-Säure katalysierten Chlormethylierung und anschließender Aminierung zum Anionenaustauscher.

12. Verwendung der monodispersen, gelförmigen Anionenaustauscher gemäß Anspruch 11 in der Gasadsorption, Katalyse und Hydrometallurgie.

## Claims

1. Process for producing monodisperse anion-exchanger gels with high stability and purity and grain size greater than 800 µm, **characterized in that**
a.) a suspension of a seed polymer with a particle size of from 5 to 500 µm composed of a crosslinked polymer with a swelling index of from 2.5 to 7.5 (measured in toluene) and with less than 1 % by weight of non-vapourizable, extractable fractions (measured by extraction with toluene) is formed in a continuous aqueous phase,
b.) the suspended seed polymer is swollen in a monomer mixture made from vinyl monomer, from 1 to 20% by weight of crosslinker and free-radical initiator,
c.) the monomer mixture is polymerized in the seed polymer, the ratio of organic phase to water phase being 1:5 to 1:20,
d.) the resultant polymer is again swollen in a monomer mixture made from vinyl monomer, from 1 to 10% by weight of crosslinker and free-radical initiator,
e.) the second monomer mixture is polymerized in the first seed-feed polymer and
f.) the resultant copolymer with swelling index from 1.5 to 3 and average diameter greater than 520 µm is functionalized by chloromethylation catalysed with a Lewis acid and then amination to give the anion exchanger.

2. Process according to Claim 1, **characterized in that** the seed polymer is a crosslinked polymer prepared from
i) from 96.5 to 99.0% by weight of monomer
ii) from 0.8 to 2.5% by weight of crosslinker and
iii) from 0.2 to 1.0% by weight of aliphatic peroxyester as polymerization initiator.

3. Process according to Claim 2, **characterized in that** the aliphatic peroxyester has the formulae (I), (II) or (III), 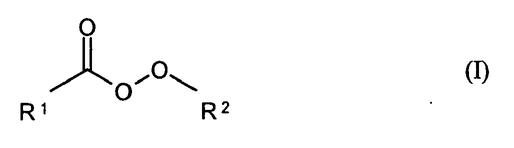 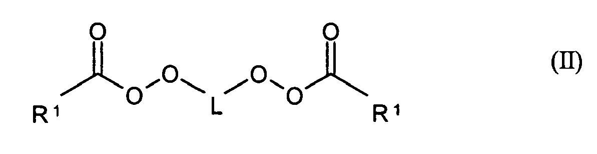 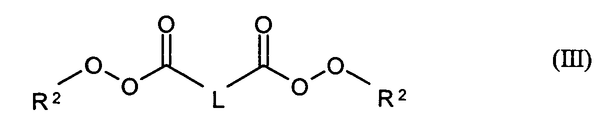 where
R¹ is an alkyl radical having from 2 to 20 carbon atoms or a cycloalkyl radical having up to 20 carbon atoms,
R² is a branched alkyl radical having from 4 to 12 carbon atoms and
L is an alkylene radical having from 2 to 20 carbon atoms or a cycloalkylene radical having up to 20 carbon atoms.

4. Process according to Claim 2, **characterized in that** the seed polymer is prepared by spraying and microencapsulation, and is monodisperse and has a swelling index of from 2.5 to 7.5.

5. Process according to Claim 1, **characterized in that** the feed polymerization is carried out in at least two or more steps.

6. Process according to Claim 5, **characterized in that** the feed polymerizations take place in succession without any solid-liquid phase separation.

7. Process according to Claim 5, **characterized in that** the free-radical initiator for the feed polymerization is an aliphatic peroxyester or an aromatic diperoxide.

8. Process according to Claim 5, **characterized in that** protective colloids for the feed steps comprise reversible methylhydroxyethylcellulose or type A gelatine.

9. Process according to Claim 5, **characterized in that** the feed steps 1 and 2 are **characterized by** the swelling indices of from 2.5 to 3.5 and from 1.75 to 2.5 and by grain size ranges of from 380 to 420 µm and 560 to 600 µm.

10. Process according to Claim 1, **characterized in that** the degree of chloromethylation is from 80 to 90% and the amination takes place in the presence of less than 5% by weight, based on the total amount of water, of an inorganic salt.

11. Monodisperse anion-exchanger gels with high stability and purity and grain size greater than 800 µm, obtainable by
a.) forming a suspension of a seed polymer with a particle size of from 5 to 500 µm composed of a crosslinked polymer with a swelling index of from 2.5 to 7.5 (measured in toluene) and with less than 1 % by weight of non-vapourizable, extractable fractions (measured by extraction with toluene) is formed in a continuous aqueous phase,
b.) swelling the suspended seed polymer in a monomer mixture made from vinyl monomer, from 1 to 20% by weight of crosslinker and free-radical initiator,
c.) polymerizing the monomer mixture in the seed polymer, the ratio of organic phase to water phase being from 1:5 to 1:20,
d.) again swelling the resultant polymer in a monomer mixture made from vinyl monomer, from 1 to 10% by weight of crosslinker and free-radical initiator,
e.) polymerizing the second monomer mixture in the first seed-feed polymer and
f.) functionalizing the resultant copolymer with swelling index from 1.5 to 3 and average diameter greater than 520 µm by chloromethylation catalysed with a Lewis acid and then amination to give the anion exchanger.

12. Use of the monodisperse anion-exchanger gel according to Claim 11 in gas adsorption, catalysis and hydrometallurgy.

## Revendications

1. Procédé de production d'échangeurs d'anions monodispersés en forme de gel, présentant une stabilité et une pureté élevées et une granulométrie supérieure à 800 µm, **caractérisé en ce que**
a.) une suspension d'un polymère de semence présentant une taille de particules de 5 à 500 µm, à base d'un polymère réticulé présentant un indice de gonflement de 2,5 à 7,5 (mesuré dans du toluène) et avec une teneur en fractions extractibles non vaporisables (mesurée par extraction avec du toluène) inférieures à 1 % en poids, est formée dans une phase aqueuse continue,
b.) on laisse le polymère de semence en suspension gonfler dans un mélange de monomères composé d'un monomère vinylique, de 1 à 20 % en poids d'un agent de réticulation et d'un amorceur radicalaire,
c.) le mélange de monomères est polymérisé dans le polymère de semence, le rapport entre la phase organique et la phase aqueuse étant de 1:5 à 1:20,
d.) on laisse à nouveau le polymère obtenu gonfler dans un mélange de monomères composés d'un monomère vinylique, de 1 à 10 % d'un agent de réticulation et d'un amorceur radicalaire,
e.) le deuxième mélange de monomères est polymérisé dans le premier polymère de semence/alimentation, et
f.) le copolymère résultant présentant un indice de gonflement de 1,5 à 3 et un diamètre moyen supérieur à 520 µm est fonctionnalisé par une chlorométhylation catalysé par un acide de Lewis, puis par amidation pour donner lieu à l'échangeur d'anions.

2. Procédé selon la revendication 1, **caractérisé en ce que** le polymère de semence est un polymère réticulé préparé à partir de
i) de 96,5 à 99,0 % en poids d'un monomère,
ii) de 0,8 à 2,5 % en poids d'un agent de réticulation, et
iii) de 0,2 à 1,0 % en poids d'un peroxyester aliphatique en tant qu'amorceur de polymérisation.

3. Procédé selon la revendication 2, **caractérisé en ce que** le peroxyester aliphatique correspond aux formules (I), (II) ou (III) 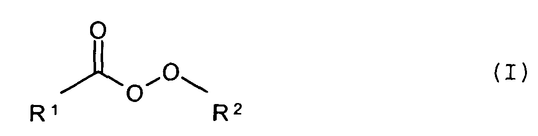 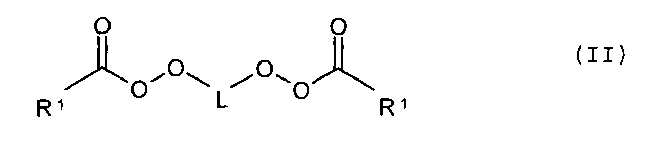 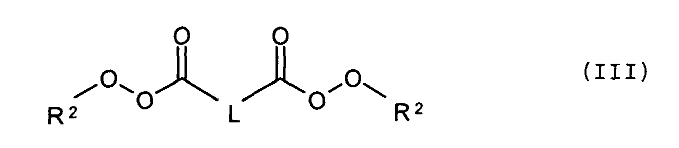 dans lesquelles
R¹ représente un radical alkyle renfermant de 2 à 20 atomes de carbone ou un radical cycloalkyle renfermant jusqu'à 20 atomes de carbone,
R² représente un radical alkyle ramifié renfermant de 4 à 12 atomes de carbone, et
L représente un radical alkylène renfermant de 2 à 20 atomes de carbone ou un radical cycloalkylène renfermant jusqu'à 20 atomes de carbone.

4. Procédé selon la revendication 2, **caractérisé en ce que** le polymère de semence est préparé par pulvérisation et micro-encapsulage, est monodispersé et présente un indice de gonflement de 2,5 à 7,5.

5. Procédé selon la revendication 1, **caractérisé en ce que** la polymérisation par alimentation est réalisée en au moins deux étapes ou plus.

6. Procédé selon la revendication 5, **caractérisé en ce que** les polymérisations d'alimentation sont réalisées successivement sans séparation des phases solide-liquides.

7. Procédé selon la revendication 5, **caractérisé en ce que** l'amorceur radicalaire de la polymérisation par alimentation est un peroxyester aliphatique ou un diperoxyde aromatique.

8. Procédé selon la revendication 5, **caractérisé en ce que** l'on utilise, en tant que colloïdes protecteurs des étapes d'alimentation, de la méthylhydroxyéthylcellulose réversible ou de la gélatine du type A.

9. Procédé selon la revendication 5, **caractérisé en ce que** les étapes d'alimentation 1 et 2 sont **caractérisées par** les indices de gonflement de 2,5 à 3,5 et de 1,75 à 2,5, et des plages de granulométrie de 380 à 420 et de 560 à 600 µm.

10. Procédé selon la revendication 1, **caractérisé en ce que** le degré de chorométhylation est de 80 à 90 % et l'amination a lieu en présence de moins de 5 % en poids, par rapport à la quantité totale d'eau, d'un sel inorganique.

11. Echangeurs d'anions monodispersés en forme de gel, présentant une stabilité et une pureté élevées et une granulométrie supérieure à 800 µm, pouvant être obtenus par
a.) formation d'une suspension d'un polymère de semence présentant une taille de particules de 5 à 500 µm, à base d'un polymère réticulé présentant un indice de gonflement de 2,5 à 7,5 (mesuré dans du toluène) et avec une teneur en fractions extractibles non vaporisables (mesurée par extraction avec du toluène) inférieure à 1 % en poids, dans une phase aqueuse continue,
b.) gonflement du polymère de semence en suspension dans un mélange de monomères composé d'un monomère vinylique, de 1 à 20 % d'un agent de réticulation et d'un amorceur radicalaire,
c.) polymérisation du mélange de monomères dans le polymère de semence, le rapport entre la phase organique et la phase aqueuse étant de 1:5 à 1:20,
d.) un nouveau gonflement du polymère obtenu dans un mélange de monomères composés d'un monomère vinylique, de 1 à 10 % d'un agent de réticulation et d'un amorceur radicalaire,
e.) polymérisation du deuxième mélange de monomères dans le premier polymère de semence/alimentation, et
f.) fonctionnalisation du copolymère résultant présentant un indice de gonflement de 1,5 à 3 et un diamètre moyen supérieur à 520 µm, par une chlorométhylation catalysée par un acide de Lewis, puis par amination pour donner lieu à l'échangeur d'anions.

12. Utilisation de l'échangeur d'anions monodispersé en forme de gel selon la revendication 11, pour l'adsorption de gaz, la catalyse et l'hydrométallurgie.
